# EUROPÄISCHE PATENTSCHRIFT

(11) **EP 2 559 583 B1**
(45) Veröffentlichungstag und Bekanntmachung des Hinweises auf die Patenterteilung: **02.07.2014**
(21) Anmeldenummer: 12171737.5
(22) Anmeldetag: 13.06.2012
(51) Int. Cl.: B60K 20/06

(54) **Vorrichtung zur Wahl einer Fahrstufe eines Fahrzeugs, Lenkrad mit einer derartigen Vorrichtung sowie Verfahren zum Wählen einer Fahrstufe eines Fahrzeugs**
Device for selecting a drive position of a vehicle, steering wheel with such a device and method for selecting a drive position of a vehicle
Dispositif destiné à choisir une boîte de vitesses d'un véhicule, volant équipé d'un dispositif de ce type et procédé de sélection d'une boîte de vitesses d'un véhicule

(30) Priorität: 18.06.2011 DE 102011104884
(43) Veröffentlichungstag der Anmeldung: 20.02.2013
(73) Patentinhaber: Valeo Schalter und Sensoren GmbH, 74321 Bietigheim-Bissingen (DE)
(72) Erfinder: Intini, Onofrio, 71665 Vaihingen a. d. Enz (DE)

(56) Entgegenhaltungen:
- EP-A2- 1 211 119
- EP-A2- 1 394 829

## Beschreibung

Die Erfindung betrifft eine Vorrichtung zur Wahl einer Fahrstufe eines Fahrzeugs, mit einer Schaltwippe, die um eine feststehende Achse schwenkbar ist und abhängig von einer Verschwenkung eine Änderung der Fahrstufe bewirkbar ist. Die Vorrichtung umfasst darüber hinaus einen federvorgespannten Bolzen, der mit der Schaltwippe gekoppelt ist und abhängig von einer Verschwenkung der Schaltwippe an einem Führungsprofil entlangführbar ist. Ein den Bolzen aufnehmendes Endteil der Schaltwippe weist ein offenes erstes Ende auf, aus dem sich der Bolzen heraus erstreckt. Darüber hinaus betrifft die Erfindung auch ein Lenkrad mit einer Vorrichtung sowie ein Verfahren zum Wählen einer Fahrstufe eines Fahrzeugs

Aus der gattungsgemäßen DE 10 2009 042 497 A1 ist ein Lenkrad mit mindestens einer Schaltwippe offenbart. Ein Fahrzeugführer, der das Lenkrad mit seinen Händen greift, kann mit der Hand, insbesondere den Fingern, die Schaltwippe bewegen, und so eine Änderung einer Fahrstufe hervorrufen. Eine dortige Schaltwippe umfasst in dem sich in das Lenkrad hineinerstreckenden Bereich einen Stößel mit einer abgerundeten Spitze Dieser Stößel ist federvorgespannt und kann an unterschiedlich geneigten Schrägen einer Kulissenführung entlang gleiten.

Die Präzision zwischen Bewegung der Schaltwippe und Auslösung eines elektronischen Signals ist jedoch eingeschränkt.

Es ist Aufgabe der vorliegenden Erfindung eine kompakt aufgebaute und bezüglich der Bewegung der Schaltwippe eindeutige und präzise Auslösung eines Signals für eine Fahrstufenwahl zu ermöglichen. Entsprechend ist es auch Aufgabe, ein Lenkrad mit einer derartigen Vorrichtung sowie ein Verfahren zum Wählen einer Fahrstufe zu schaffen.

Diese Aufgabe wird durch eine Vorrichtung, ein Lenkrad und ein Verfahren gemäß den unabhängigen Ansprüchen gelöst.

Eine erfindungsgemäße Vorrichtung zur Wahl einer Fahrstufe eines Fahrzeugs umfasst zumindest eine Schaltwippe, die durch Finger einer Hand eines Fahrzeugführers berührt und betätigt werden kann. Die Schaltwippe ist um eine feststehende Achse schwenkbar und abhängig von einer Verschwenkung ist eine Änderung der Fahrstufe bewirkbar. Die Vorrichtung umfasst einen durch eine Feder vorgespannten Bolzen, der mit der Schaltwippe gekoppelt ist und abhängig von einer Verschwenkung der Schaltwippe an einem Führungsprofil der Vorrichtung entlangführbar ist. Die Schaltwippe weist ein den Bolzen aufnehmendes offenes erstes Ende auf, aus den sich der Bolzen heraus erstreckt.

Das Endteil der Schaltwippe umfasst ein den ersten Ende gegenuberliegendes zweites Ende, welches mit einem durch eine Feder vorgespannten und separat zur Schaltwippe ausgebildeten Betätigungsgeber verbunden ist, durch welchen abhängig von seiner durch die Bewegung des Endteils beeinflussbaren Stellung ein elektronischer Schalter zur Fahrstufenanderung betätigbar ist. Durch eine derartige Ausgestaltung einer Vorrichtung kann in kompakter und bauraumminimiert aufgebauter Weise eine besonders präzise Kopplung zwischen der Bewegung der Schaltwippe und dem Auslösen des elektronischen Schalters erzielt werden.

Vorzugsweise ist vorgesehen, dass der Betätigungsgeber in Verlängerung der Längsachse des Bolzens angeordnet ist. Die direkte Bewegungsübertragung sowie die Bewegung der einzelnen Komponenten dadurch ist somit besonders präzise und auch leichtgängig möglich. Ein Verspreizen, Verklemmen oder dergleichen kann dadurch vermieden werden. Darüber hinaus kann durch diese in Reihe Anordnung auch ein präziser Bewegungsablauf und eine besonders genaue Betätigung des elektronischen Schalters bewirkt werden

Vorzugsweise ist vorgesehen, dass das Führungsprofil eine Schräge aufweist, an der das vordere verjüngte Ende des Bolzens abhängig von der Verschwenkung der Schaltwippe entlang nach unten geführt ist.

Insbesondere ist die Schräge und somit auch das Führungsprofil einstückig an einer Gehäusewand der Vorrichtung angeordnet und integriert. Beispielsweise kann dieses Führungsprofil aus Kunststoff ausgebildet sein. Dadurch ist es gewichtsminimiert ausgebildet und darüber hinaus auch einfach durch ein Spritzgussteil herstellbar. Durch das gezielte Nachuntenführen beim Betätigen der Schaltwippe kann der Bewegungsablauf bezüglich der Kopplung mit dem Betätigungsgeber sehr genau erfüllt werden

Vorzugsweise ist vorgesehen, dass ein vorderes Ende des Bolzens ein Drehrad aufweist, welches mit dem Führungsprofil zur Bewegungsführung kontaktiert ist. Indem quasi ein weiteres separates Bauteil, das Drehrad, vorgesehen ist, welches darüber hinaus auch noch relativ bewegbar zu dem Bolzen an diesen angeordnet ist, kann das Entlanggleiten an dem Führungsprofil auch sehr reibungsminimiert und dadurch verschleißarm erfolgen. Des Weiteren wird somit der Kraftabfall minimiert und auch die Lebensdauer der Vorrichtung erhöht.

Das Führungsprofil kann auch als separates Bauteil ausgebildet sein, wodurch sich unterschiedliche Materialpaarungen zwischen dem Bolzen und dem Führungsprofil einerseits und dem Führungsprofil und dem Gehäuse andererseits realisieren lassen. Eine mechanisch sehr stabile und verschleißarme Materialkombination ist dadurch möglich.

Vorzugsweise ist vorgesehen, dass das Endteil der Schaltwippe, der Bolzen, das Führungsprofil, der Betätigungsgeber und der elektronische Schalter in einem gemeinsamen Gehäuse angeordnet sind. Dadurch kann eine einerseits sehr geschützte und andererseits sehr kompakte Ausgestaltung erzielt werden.

Vorzugsweise ist der Betätigungsgeber auf der dem des zweiten Ende des Endteils zugewandten und damit kontaktierten Seite mit einer schrägen Anlagewand ausgebildet. Auch dadurch wird bei der Relativbewegung zwischen dem Endteil der Schaltwippe und diesem Betätigungsgeber eine sehr leichtgängige und ruckfreie Bewegungsführung ermöglicht. Auch dies trägt positiv zur äußerst präzisen und schnell ansprechenden Bewegungskopplung zwischen der Schaltwippe einerseits und der Auslösung des elektronischen Schalters andererseits bei,

Vorzugsweise ist vorgesehen, dass die Orientierung dieser Anlagewand gleich der Orientierung einer Schräge des Führungsprofils ist, an der der Bolzen geführt ist. Die Orientierung ist somit dahingehend, dass eine sehr gleichlaufende Bewegung des Nachuntenführens des Endteils der Schaltwippe einerseits, dem Hineinführen des federvorgespannten Bolzens in das Endteil andererseits, sowie dem Verschieben des Betätigungsgebers zum Auslösen des elektronischen Schalters optimal aufeinander abgestimmt erfolgen kann. Unerwünschtes Spiel in den Bewegungen kann dadurch vermieden werden. Eine sehr direkte Rückkopplung der Bewegung der Schaltwippe einerseits und einer unverzüglichen Auslösung der Fahrstufenwahl andererseits ist dadurch gewährleistet. Besonders kurze Schaltzeiten sind dadurch erreichbar.

Die Orientierung der Anlagewand und der Schräge betrifft nicht die Neigung bzw. den Neigungswinkel als solches. Der Neigungswinkel der Anlagewand und der Schräge bezüglich einer Vertikalen kann diesbezüglich durchaus unterschiedlich sein bzw. ist vorzugsweise sogar unterschiedlich

Vorzugweise ist vorgesehen, dass die Bewegung des Betätigungsgebers eine geradlinige Linearbewegung ist, insbesondere eine Linearbewegung in Richtung oder parallel zur Längsachse des Bolzens. Gerade dann, wenn der Bolzen, das Endteil und der Betätigungsgeber quasi in einer Reihe hintereinander angeordnet sind, ist diese Anordnung und das Bewegungsmuster besonders vorteilhaft, um eine direkte und präzise Bewegungsübertragung der Schaltwippe auf den elektronischen Schalter gewährleisten zu können.

Vorzugsweise ist in einer weiteren Ausführung vorgesehen, dass der Betätigungsgeber abhängig von der Verschwenkung der Schaltwippe in einer Richtung senkrecht der Längsachse des Bolzens in seiner Stellung veränderbar ist. Auch diese alternative Ausgestaltung gewährleistet die oben genannten Vorteile.

Vorzugsweise ist vorgesehen, dass bei dieser alternativen Ausgestaltung der Betätigungsgeber einen Bügel aufweist, der auf einer Oberseite des Endteils der Schaltwippe durch eine Feder gehalten aufsitzt, die in der Grundstellung der Schaltwippe vorgespannt ist.

Darüber hinaus betrifft die Erfindung auch ein Lenkrad für ein Fahrzeug mit einer erfindungsgemäßen Vorrichtung oder einer vorteilhaften Ausgestaltung davon.

Des Weiteren betrifft die Erfindung ein Verfahren zum Wählen einer Fahrstufe eines Fahrzeugs, mit einer Schaltwippe, die um eine feststehende Achse schwenkbar ist und abhängig von einer Verschwenkung eine Änderung der Fahrstufe bewirkt wird. Ein mit einer Feder vorgespannter Bolzen der Vorrichtung wird mit der Schaltwippe gekoppelt und abhängig von einer Verschwenkung der Schaltwippe wird der Bolzen an einem Führungsprofil entlang geführt. Ein den Bolzen aufnehmendes Endteil der Schaltwippe umfasst ein offenes erstes Ende, aus dem sich der Bolzen heraus erstreckt. Das Endteil weist ein dem ersten Ende gegenüberliegendes zweites Ende auf, welches mit einem durch eine Feder vorgespannten separat zur Schaltwippe ausgebildeten Betätigungsgeber verbunden wird, durch den abhängig von seiner durch die Bewegung des Endteils beeinflussbaren Stellung ein elektronischer Schalter zur Fahrstufenänderung betätigt wird.

In einer vorteilhaften Ausführung wird der Betätigungsgeber zur Betätigung des Schalters abhängig von der Verschwenkung der Schaltwippe in Richtung der Längsachse des Bolzens oder parallel dazu zum Bolzen hin verschoben und gleichzeitig der Bolzen durch das Verschwenken der Schaltwippe und dem Entlangführen an dem Führungsprofil in das Endteil hineingeschoben.

In einer alternativen Ausführung wird vorgesehen, dass der Betätigungsgeber zur Betätigung des Schalters abhängig von der Verschwenkung der Schaltwippe senkrecht zur Längsachse des Bolzens verschoben wird und gleichzeitig der Bolzen durch das Verschwenken der Schaltwippe und dem Entlangführen an dem Führungsprofil in das Endteil hineingeschoben wird.

Vorteilhafte Ausführungen der erfindungsgemäßen Vorrichtung sind als vorteilhafte Ausführungen des Verfahrens anzusehen, wobei dazu die Vorrichtung die entsprechenden Mittel zur Durchführung der Verfahrensschritte aufweist.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen naher erläutert Es zeigen:
- Fig. 1: eine perspektivische Darstellung eines erfindungsgemäßen Lenkrads mit einem Ausführungsbeispiel einer erfindungsgemäßen Vorrichtung;
- Fig. 2: eine perspektivische Darstellung eines ersten Ausführungsbeispiels einer erfindungsgemäßen Vorrichtung;
- Fig. 3: eine vergrößerte Darstellung eines Teilbereichs der Ausführung in Fig. 1;
- Fig. 4: eine Seitenansicht von Teilkomponenten der Ausführung in Fig. 2 und Fig. 3;
- Fig. 5: eine perspektivische Darstellung eines weiteren Ausführungsbeispiels einer erfindungsgemäßen Vorrichtung;
- Fig. 6: eine perspektivische Darstellung eines Teilausschnitts eines Betätigungsgebers mit elektronischen Schaltern, und
- Fig. 7: eine perspektivische Darstellung eines weiteren Ausführungsbeispiels eines Bolzens einer erfindungsgemäßen Vorrichtung

In den Figuren werden gleiche oder funktionsgleiche Elemente mit den gleichen Bezugszeichen versehen

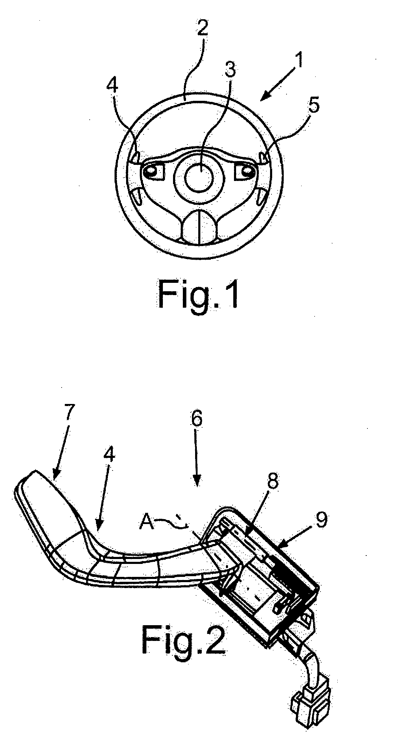

In Fig. 1 ist ein Lenkrad 1 für ein Fahrzeug gezeigt. Es weist einen ringförmigen Griffbereich 2 auf, der mit den Händen eines Fahrzeugführers gegriffen werden kann. Mittig ist ein Nabenbereich 3 ausgebildet, der durch entsprechende Speichen mit dem Griffbereich 2 verbunden ist. Hinter dem Griffbereich 2 sind, beispielsweise in den Nabenbereich 3 mündend, an gegenuberliegenden Seiten zwei Schaltwippen 4 und 5 ausgebildet. Diese können durch die Hände bzw. die Finger berührt werden und relativ zum Griffbereich 2 bewegt werden, wodurch sich eine Änderung der Fahrstufe und somit ein Gangwechsel des Fahrzeugs bewerkstelligen lässt.

In Fig 2 ist in einer perspektivischen Darstellung ein erstes Ausführungsbeispiel einer erfindungsgemäßen Vorrichtung 6 gezeigt, wie sie am Lenkrad 1 verbaut ist. Die Vorrichtung 6 umfasst die Schaltwippe 4, die einen gebogenen länglichen Bügel aufweist. Insbesondere an einem vorderen freien Endbereich 7 dieser Schaltwippe 4 kann diese gegriffen werden und entsprechend verschwenkt werden um die Fahrstufenwahl zu bewirken. Die Schaltwippe 4 umfasst darüber hinaus ein weiteres Endteil 8, welches in einem Gehäuse 9 angeordnet ist. Der restliche Bereich der Schaltwippe 4 erstreckt sich aus dem Gehäuse 9 heraus. Die Schaltwippe 4 ist insbesondere um eine relativ zum Gehäuse 9 feststehende Achse A verschwenkbar. Diese ist in Richtung des ersten Endbereichs 7 von dem Endteil 8 zurückversetzt jedoch benachbart und nah zu diesem Endteil 8 angeordnet Dadurch ergeben sich vorteilhafte Hebelwirkungen bezüglich der Betätigung der Schaltwippe 4.

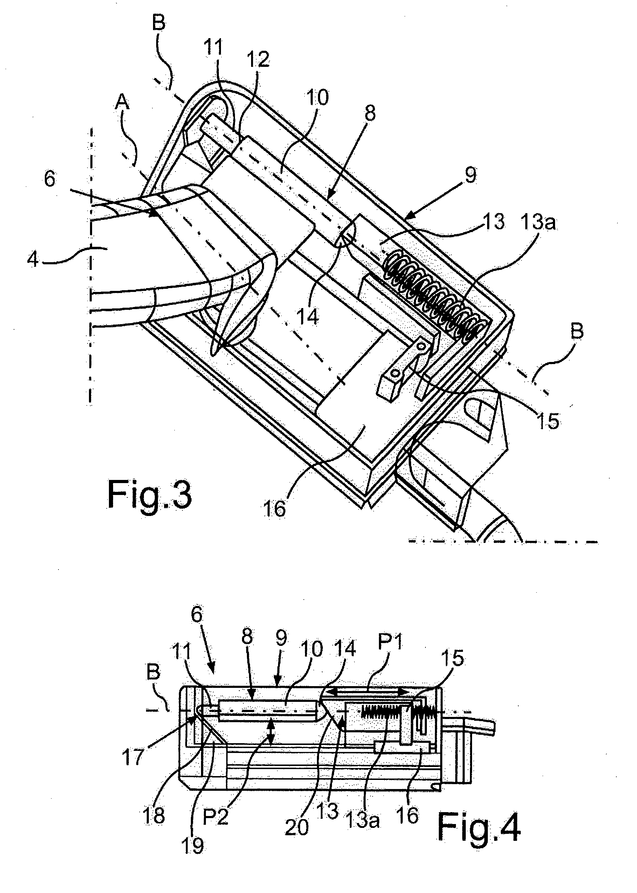

Zur weiteren Erläuterung wird auf die Fig. 3 verwiesen. An dem in dem Gehäuse 9 sich befindlichen Endteil 8 ist ein Aufnahmeelement 10 ausgebildet, in welches sich ein Bolzen 11 hineinerstreckt. Der Bolzen 11 ist als länglicher Stift ausgebildet, der sich aus einem offenen ersten Ende 12 des Aufnahmeelements 10 herauserstreckt. Der Bolzen 11 ist in dem Aufnahmeelement 10 durch eine nicht erkennbare Feder vorgespannt gehalten und relativ zum Aufnahmeelement 10 bewegbar. Eine Längsachse B des Bolzens 11 ist ebenfall eingezeichnet.

Darüber hinaus umfasst die Vorrichtung 6 einen Betätigungsgeber 13, der ein separates Bauteil zur Schaltwippe 4 und zum Bolzen 11 darstellt. Im in Fig. 3 gezeigten Ausführungsbeispiel ist der Betätigungsgeber 13 ein längliches eckiges Bauteil, welches in axialer Richtung des Bolzens 11 in Reihe zu dem Aufnahmeteil 10 und dem Bolzen 11 angeordnet ist. Ein dem ersten Ende 12 gegenüberliegendes Ende 14 des Endteils 8 ist in direktem Kontakt mit dem Betätigungsgeber 13.

In dem Gehäuse 9 ist darüber hinaus auch noch zumindest ein elektronischer Schalter 15 angeordnet, der auf einem Schaltungsträger 16 angeordnet ist. Der elektronische Schalter 15 ist im Gehäuse 9 ortsfest portioniert. Der Betätigungsgeber 13 hingegen ist bewegbar in dem Gehäuse 9 angeordnet, und kann insbesondere lediglich eine geradlinige Linearbewegung entlang der Achse B des Bolzens 11 oder entlang einer Geraden parallel dazu durchführen.

Der Betätigungsgeber 13 weist innen liegend eine Feder 14 auf, durch welche die Hin- und Herbewegung des Betätigungsgebers 13 automatisch unterstutzt ist.

In Fig. 4 ist eine Seitenansicht der Vorrichtung 6 im Hinblick auf die in dem Gehäuse 9 angeordneten Komponenten gezeigt. Wie dabei zu erkennen ist, liegt ein vorderes sich verjüngendes Ende 17 des Bolzens 11 an einer Schräge 18 eines Führungsprofils 19 an. Im Ausführungsbeispiel ist das Fuhrungsprofil 19 integral mit dem Gehäuse 9 ausgebildet. Ein sich ebenfalls in Richtung zum Betätigungsgeber 13 hin verjüngendes zweites Ende 14 des Endteils 8 liegt an einer schrägen Anlagewand 20 des Betätigungsgebers 13 an.

Wie aus der Darstellung in Fig. 4 zu erkennen ist, kann der Betätigungsgeber 13 lediglich in horizontaler Richtung linear entlang des Pfeils P1 hin- und herbewegt werden.

Die Orientierung der schrägen Anlagewand 20 ist gleich der Orientierung der Schräge 18 des Führungsprofils 19. Die Neigungswinkel dieser Orientierungen können jedoch unterschiedlich sein.

Durch den Pfeil P2 wird dem gegenüber die Bewegung des Endteils 8 in dem Gehäuse 9 dargestellt, wenn die Schaltwippe 4 durch Betätigen im Endbereich 7 um die Achse A geschwenkt wird. Im Weiteren wird das Betätigungsprinzip näher erläutert.

Greift ein Fahrzeugführer mit den Fingern der linken Hand die Schaltwippe 4 beispielsweise im Endbereich 7 und zieht sie nach vorne und somit in Richtung des Griffbereichs 2, so wird die Schaltwippe 4 um die Achse A verschwenkt, wobei dabei der Endteil 8 gemäß der Darstellung in Fig. 4 nach unten bewegt wird. Dabei wird der Bolzen 11 mit seinem vorderen Ende 17 entlang der Schräge 18 nach unten geführt und gegebenenfalls teilweise in das Aufnahmeelement 10 entgegen der darin angeordneten Feder nach innen gedruckt.

Gleichzeitig wird das hintere zweite Ende 14 entlang der schrägen Anlagewand 20 geführt und der Betätigungsgeber 13 in horizontaler Richtung nach rechts entgegen der Federkraft der Feder 14 verschoben. Entlang dieser Bewegungsführung wird dann eine Kontaktierung des Betätigungsgebers 13 mit dem elektronischen Schalter 15 bewirkt und ein elektronisches Signal erzeugt, welches die gewünschte Fahrstufenänderung darstellt. Diese Fahrstufenänderung wird dann über die Steuergeräte des Fahrzeugs bewirkt. Wird die Schaltwippe 4 von dem Fahrzeugnutzer dann wieder losgelassen, so wird sie automatisch wieder in ihre Grundstellung bewegt, wobei dies ebenfalls durch eine Rückstellfeder erfolgen kann. Dies bedeutet also, dass die Schaltwippe 4 wieder automatisch von dem Griffbereich 2 wegbewegt wird, so dass sich das Endteil 8 um die Achse A verschwenkt wieder in Richtung des Pfeils P2 nach oben bewegt. Dazu wird dann der Bolzen 11 wieder entlang der Schräge 18 automatisch nach oben geführt, wodurch auch das hintere zweite Ende 14 entlang der schrägen Anlagewand 20 wieder in die in Fig. 4 gezeigte Ausgangsstellung nach oben geführt wird. Dadurch wird dann der Betätigungsgeber 13 automatisch wieder von seiner nach rechts verschobenen Auslösestellung in die in Fig. 4 gezeigte Grundstellung verschoben und dort durch die Feder 14 vorgespannt gehalten. In dieser in Fig. 4 dann gezeigten Grundstellung ist keine Kontaktierung mit dem elektronischen Schalter 15 einhergehend.

Ein besonderer Vorteil ist darin zu sehen, dass durch diese konstruktive Ausgestaltung keine unerwünscht hohen Kräfte auf den elektronischen Schalter 15 beim Berühren und Kontaktieren einwirken, da nur durch den Betätigungsgeber 13 und die Feder 14 eine unmittelbare Krafteinwirkung ausgelöst durch das Endteil 8 auf diesen Schalter 15 einher geht. Durch diesen Betätigungsgeber 13 und die Feder 14 kann somit eine gewisse Kraftdämpfung erfolgen, so dass auch eine lange Lebensdauer des Schalters 15 gewährleistet ist. Beim Nachuntenbewegen des Endteils 8 ist somit dieses Endteil 8 nur indirekt über den Betätigungsgeber 13 mit dem Schalter 15 gekoppelt und es kann erreicht werden, dass durch den Betätigungsgeber 13 nur mit einer definierten und keiner unerwünscht großen Kraft die Kontaktierung des Schalters 15 und dadurch die Signalauslösung bewerkstelligt wird.

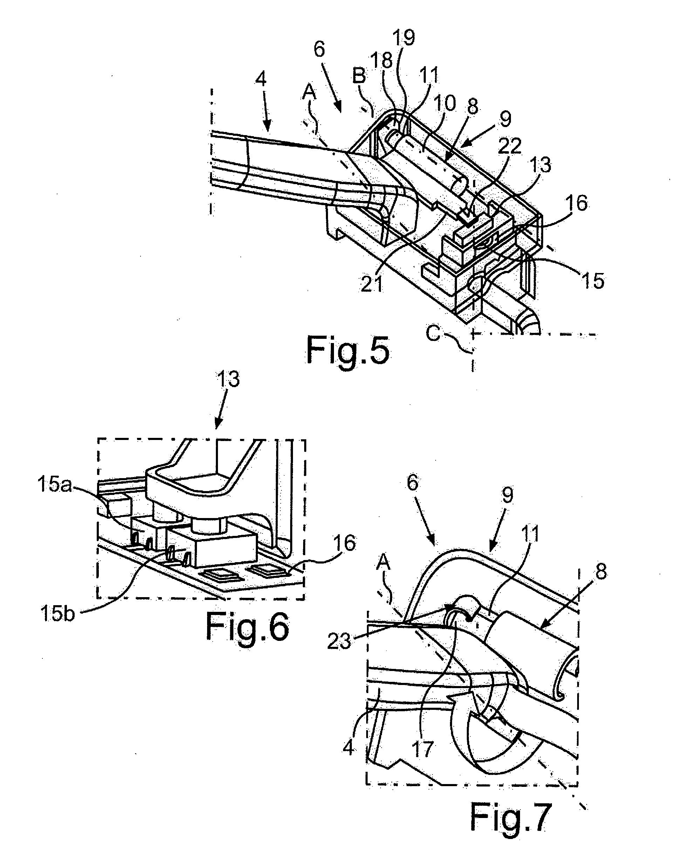

In Fig. 5 ist in einer perspektivischen Darstellung ein weiteres Ausführungsbeispiel einer Vorrichtung 6 gezeigt. Die Schaltwippe 4 ist lediglich mit dem Bereich gezeigt, der dem Gehäuse 9 zugewandt ist. Selbstverständlich weist die Schaltwippe 4 auch den in Fig. 2 erkennbaren vorderen Endbereich 7 auf.

Im Unterschied zur Ausgestaltung gemäß Fig. 2 bis 4 ist hier vorgesehen, dass ein unterschiedlicher Betätigungsgeber 13 vorgesehen ist. Auch hier ist vorgesehen, dass der Betatrgungsgeber 13 im Wesentlichen noch in Reihe zu dem Bolzen 11 und dem Endteil 8 angeordnet ist. Versetzt zu dem Aufnahmeteil 10 ist hier eine zungenartige Lasche 21 an dem Endteil 8 ausgebildet, welche in Richtung des Betätigungsgebers 13 orientiert ist. An einer Oberseite der Lasche 21 liegt ein Bügel 22 des Betätigungsgebers 13 auf. Auch hier ist eine Federvorspannung vorzugsweise vorgesehen. In der in Fig. 5 gezeigten Grundstellung ist die Federvorspannung dahingehend ausgebildet, dass die nicht erkennbare Feder den Betätigungsgeber 13 entlang der Achse C nach unten ziehen möchte. Dies wird jedoch durch die Grundstellung der Schaltwippe 4, wie sie in Fig. 5 eingenommen ist, verhindert.

Bei dem Ausführungsbeispiel in Fig. 5 ist vorgesehen, dass der Betätigungsgeber 13 nicht in Richtung der Achse B oder einer parallelen Achse dazu verschiebbar ist, sondern entlang der Achse C nach oben und nach unten verschiebbar ist, wobei die Achse C senkrecht zur Achse B und somit auch senkrecht zur Achse A orientiert ist.

Wird nun bei dieser Ausgestaltung die Schaltwippe 4 in Richtung des Griffbereichs 2 gezogen, so schwenkt auch hier wiederum das Endteil 8 um die Achse A nach unten und die Bewegungsführung des Bolzens 11 entlang der Schräge 18 des Fuhrungsprofils 19 ist analog zur Ausgestaltung in Fig. 2 bis 4. Durch das Nachuntenbewegen des Endteils 8 wird aufgrund der Federvorspannung des Betätigungsgebers 13 auch automatisch dieser Betätigungsgeber 13 entlang der Achse C nach unten bewegt und dadurch entlang dieses Bewegongswegs dann der Schalter 15 zur Signalauslösung betätigt. Wird dann die Schaltwippe 4 wieder losgelassen und bewegt sich diese verschwenkt um die Achse A wiederum vom Griffbereich 2 weg, so bewegt sich das Endteil 8 wieder analog zur Erläuterung des Ausführungsbeispiels in Fig. 2 bis 4 nach oben in die in Fig. 5 gezeigte Grundstellung. Dabei wird dann automatisch der Betätigungsgeber 13 entgegen seiner Zugkraft der Feder entlang der Achse C senkrecht nach oben bewegt und die Kontaktierung mit dem Schalter 15 gelöst, so dass keine Signalauslösung mehr bewirkt wird.

In Fig. 6 ist in einer Ausschnittdarstellung ein weiteres Ausführungsbeispiel gezeigt, bei der eine redundante Bestückung des Schaltungsträgers 16 mit zwei elektronischen Schaltern 15a und 15b vorgesehen ist. Dadurch kann eine gewisse Redundanz des elektrischen Signals erzeugt werden.

Darüber hinaus ist in Fig. 7 ein weiteres Ausführungsbeispiel einer Vorrichtung 6 in einem Teilausschnitt gezeigt. Im Unterschied zu den Ausgestaltungen gemäß Fig. 2 bis Fig. 6 ist hier vorgesehen, dass ein vorderes Ende 17 des Bolzens 11 ein Drehrad 23 aufweist, welches an dem vorderen Ende 17 drehbar gelagert ist. Bei dieser Ausgestaltung ist dieses Drehrad 23 im direkten Kontakt mit der Schräge 18 und gleitet dann entsprechend nach unten, wenn die Schaltwippe 4 um die Achse A verschwenkt wird. Durch eine derartige Ausgestaltung kann eine Reduzierung der Reibungskraft und ein leichtgängigeres Bewegen bewirkt werden.

## Patentansprüche

1. Vorrichtung (6) zur Wahl einer Fahrstufe eines Fahrzeugs, mit einer Schaltwippe (4, 5), die um eine feststehende Achse (A) schwenkbar ist und abhängig von einer Verschwenkung eine Änderung der Fahrstufe bewirkbar ist, und einem federvorgespannten Bolzen (11), der mit der Schaltwippe (4, 5) gekoppelt ist und abhängig von einer Verschwenkung der Schaltwippe (4, 5) an einem Führungsprofil (19) entlangführbar ist, und ein den Bolzen (11) aufnehmendes Endteil (8) der Schaltwippe (4, 5) ein offenes erstes Ende (12) aufweist, aus dem sich der Bolzen (11) herauserstreckt,
**dadurch gekennzeichnet, dass**
das Endteil (8) ein dem ersten Ende (12) gegenüberliegendes zweites Ende (14) umfasst, welches mit einem durch eine Feder (13a) vorgespannten und separat zur Schaltwippe (4, 5) ausgebildeten Betätigungsgeber (13) verbunden ist, durch welchen abhängig von seiner durch die Bewegung des Endteils (8) beeinflussbaren Stellung ein elektronischer Schalter (15, 15a, 15b) zur Fahrstufenänderung betätigbar ist.

2. Vorrichtung (6) nach Anspruch 1,
**dadurch gekennzeichnet, dass**
der Betätigungsgeber (13) in Verlängerung der Längsachse (B) des Bolzens (11) angeordnet ist.

3. Vorrichtung (6) nach Anspruch 1 oder 2,
**dadurch gekennzeichnet, dass**
das Führungsprofil (19) eine Schräge (18) aufweist, an der ein vorderes verjüngtes Ende (17) des Bolzens (11) abhängig von der Verschwenkung der Schaltwippe (4, 5) entlang nach unten führbar ist.

4. Vorrichtung (6) nach einem der vorhergehenden Ansprüche,
**dadurch gekennzeichnet, dass**
ein vorderes Ende (17) des Bolzens (11) ein Drehrad (23) aufweist, welches mit dem Führungsprofil (19) zur Bewegungsführung kontaktiert ist.

5. Vorrichtung (6) nach einem der vorhergehenden Ansprüche,
**dadurch gekennzeichnet, dass**
das Endteil (8) der Schaltwippe (4, 5), der Bolzen (11), das Führungsprofil (19), der Betätigungsgeber (13) und der Schalter (15, 15a, 15b) in einem gemeinsamen Gehäuse (9) angeordnet sind.

6. Vorrichtung (6) nach einem der vorhergehenden Ansprüche,
**dadurch gekennzeichnet, dass**
der Betätigungsgeber (13) auf der dem zweiten Ende (14) des Endteils (8) zugewandten und damit kontaktierten Seite eine schräge Anlagewand (20) aufweist.

7. Vorrichtung (6) nach Anspruch 6,
**dadurch gekennzeichnet, dass**
die Orientierung der Anlagewand (20) gleich der Orientierung einer Schräge (18) des Führungsprofils (19) ist, an der der Bolzen (11) geführt ist.

8. Vorrichtung (6) nach Anspruch 6 oder 7,
**dadurch gekennzeichnet, dass**
die Bewegung des Betätigungsgebers (13) eine geradlinige Linearbewegung ist, insbesondere nur eine Linearbewegung in Richtung oder parallel zur Längsachse (B) des Bolzens (11).

9. Vorrichtung (6) nach einem der vorhergehenden Ansprüche 1 bis 5,
**dadurch gekennzeichnet, dass**
der Betätigungsgeber (13) abhängig von der Verschwenkung der Schaltwippe (4, 5) in einer Richtung senkrecht der Längsachse (B) des Bolzens (11) in seiner Stellung veränderbar ist.

10. Vorrichtung (6) nach Anspruch 9,
**dadurch gekennzeichnet, dass**
der Betätigungsgeber (13) einen Bügel (22) aufweist, der auf einer Oberseite einer Lasche (21) des Endteils (8) der Schaltwippe (4, 5) durch eine Feder gehalten aufsitzt, die in der Grundstellung der Schaltwippe (4, 5) vorgespannt ist.

11. Lenkrad (1) für ein Fahrzeug mit einer Vorrichtung (6) nach einem der vorhergehenden Ansprüche.

12. Verfahren zum Wählen einer Fahrstufe eines Fahrzeugs, mit einer Schaltwippe (4, 5), die um eine feststehende Achse (A) schwenkbar ist und abhängig von einer Verschwenkung eine Änderung der Fahrstufe bewirkt wird, wobei ein federvorgespannter Bolzen (11) mit der Schaltwippe (4, 5) gekoppelt wird und abhängig von einer Verschwenkung der Schaltwippe (4, 5) an einem Führungsprofil (19) entlang geführt wird, und ein den Bolzen (11) aufnehmendes Endteil (8) der Schaltwippe (4, 5) ein offenes erstes Ende (12) aufweist, aus dem sich der Bolzen (11) herauserstreckt,
**dadurch gekennzeichnet, dass**
das Endteil (8) ein dem ersten Ende (12) gegenüberliegendes zweites Ende (14) umfasst, welches mit einem durch eine Feder (13a) vorgespannten und separat zur Schaltwippe (4, 5) ausgebildeten Betätigungsgeber (13) verbunden wird, durch welchen abhängig von seiner durch die Bewegung des Endteils (8) beeinflussbaren Stellung ein elektronischer Schalter (15, 15a, 15b) zur Fahrstufenänderung betätigt wird.

13. Verfahren nach Anspruch 12,
**dadurch gekennzeichnet, dass**
der Betätigungsgeber (13) zur Betätigung des Schalters (15, 15a, 15b) abhängig von der Verschwenkung der Schaltwippe (4, 5) in Richtung der Längsachse (B) des Bolzens (11) oder parallel dazu zum Bolzen (11) hin verschoben wird und gleichzeitig der Bolzen (11) durch das Verschwenken der Schaltwippe (4, 5) an dem Führungsprofil (19) entlang nach unten geschoben wird.

14. Verfahren nach Anspruch 12,
**dadurch gekennzeichnet, dass**
der Betätigungsgeber (13) zur Betätigung des Schalters (15, 15a, 15b) abhängig von der Verschwenkung der Schaltwippe (4, 5) senkrecht zur Längsachse (B) des Bolzens (11) verschoben wird und gleichzeitig der Bolzen (11) durch das Verschwenken der Schaltwippe (4, 5) an dem Führungsprofil (19) entlang nach unten geschoben wird.

## Claims

1. Device (6) for selecting a drive position of a vehicle, having a switching rocker (4, 5) which can pivot about a fixed axis (A) and which can bring about a change in the drive position as a function of pivoting, and having a spring-prestressed bolt (11) which is coupled to the switching rocker (4, 5) and can be moved along a guide profile (19) as a function of pivoting of the switching rocker (4, 5), and wherein an end part (8), accommodating the bolt (11), of the switching rocker (4, 5) has an open first end (12), out of which the bolt (11) extends,
**characterized in that**
the end part (8) comprises a second end (14) which lies opposite the first end (12) and is connected to an activation signal generator (13) which is prestressed by a spring (13a) and is embodied separately from the switching rocker (4, 5) and by which an electronic switch (15, 15a, 15b) can be activated, as a function of the position thereof which can be influenced by the movement of the end part (8), in order to change the drive position.

2. Device (6) according to Claim 1,
**characterized in that**
the activation signal generator (13) is arranged as an extension of the longitudinal axis (B) of the bolt (11).

3. Device (6) according to Claim 1 or 2,
**characterized in that**
the guide profile (19) has a slope (18) along which a front tapering end (17) of the bolt (11) can be guided in a downward direction as a function of the pivoting of the switching rocker (4, 5).

4. Device (6) according to one of the preceding claims,
**characterized in that**
a front end (17) of the bolt (11) has a rotational wheel (23) which is placed in contact with the guide profile (19) in order to guide the movement.

5. Device (6) according to one of the preceding claims,
**characterized in that**
the end part (8) of the switching rocker (4, 5), the bolt (11), the guide profile (19), the activation signal generator (13) and the switch (15, 15a, 15b) are arranged in a common housing (9).

6. Device (6) according to one of the preceding claims,
**characterized in that**
the activation signal generator (13) has a sloping bearing wall (20) on the side which faces the second end (14) of the end part (8) and is placed in contact therewith.

7. Device (6) according to Claim 6,
**characterized in that**
the orientation of the bearing wall (20) is the same as the orientation of a slope (18) of the guide profile (19) on which the bolt (11) is guided.

8. Device (6) according to Claim 6 or 7,
**characterized in that**
the movement of the activation signal generator (13) is a straight linear movement, in particular only a linear movement in the direction of or parallel to the longitudinal axis (B) of the bolt (11).

9. Device (6) according to one of the preceding Claims 1 to 5,
**characterized in that**
the activation signal generator (13) can be varied in its position as a function of the pivoting of the switching rocker (4, 5), in a direction perpendicular to the longitudinal axis (B) of the bolt (11).

10. Device (6) according to Claim 9,
**characterized in that**
the activation signal generator (13) has a bent element (22) which is seated in a manner held by a spring on an upper side of a clip (21) of the end part (8) of the switching rocker (4, 5), which spring is prestressed in the basic position of the switching rocker (4, 5).

11. Steering wheel (1) for a vehicle having a device (6) according to one of the preceding claims.

12. Method for selecting a drive position of a vehicle, having a switching rocker (4, 5) which can pivot about a fixed axis (A) and which brings about a change in the drive position as a function of pivoting, wherein a spring-prestressed bolt (11) is coupled to the switching rocker (4, 5) and is guided along a guide profile (19) as a function of pivoting of the switching rocker (4, 5), and an end part (8), accommodating the bolt (11), of the switching rocker (4, 5) has an open first end (12), out of which the bolt (11) extends,
**characterized in that**
the end part (8) comprises a second end (14) which lies opposite the first end (12) and is connected to an activation signal generator (13) which is prestressed by a spring (13a) and is embodied separately from the switching rocker (4, 5) and by which an electronic switch (15, 15a, 15b) is activated, as a function of the position thereof which can be influenced by the movement of the end part (8), in order to change the drive position.

13. Method according to Claim 12,
**characterized in that**
in order to activate the switch (15, 15a, 15b) the activation signal generator (13) is shifted in the direction of the longitudinal axis (B) of the bolt (11) or parallel thereto towards the bolt (11) as a function of the pivoting of the switching rocker (4, 5), and at the same time the bolt (11) is pushed along the guide profile (19) in a downward direction by the pivoting of the switching rocker (4, 5).

14. Method according to Claim 12,
**characterized in that**
in order to activate the switch (15, 15a, 15b) the activation signal generator (13) is shifted perpendicularly with respect to the longitudinal axis (B) of the bolt (11) as a function of the pivoting of the switching rocker (4, 5), and at the same time the bolt (11) is pushed along the guide profile (19) in a downward direction by the pivoting of the switching rocker (4, 5).

## Revendications

1. Dispositif (6) pour sélectionner un rapport d'un véhicule, comprenant un sélecteur de vitesses (4, 5) qui peut pivoter autour d'un axe fixe (A) et qui peut provoquer un changement de rapport en fonction d'un pivotement, et un goujon précontraint par ressort (11) qui est accouplé au sélecteur de vitesses (4, 5) et qui peut être guidé le long d'un profil de guidage (19) en fonction d'un pivotement du sélecteur de vitesses (4, 5), et une partie d'extrémité (8) du sélecteur de vitesses (4, 5) recevant le goujon (11) présentant une première extrémité ouverte (12) hors de laquelle s'étend le goujon (11),
**caractérisé en ce que**
la partie d'extrémité (8) comprend une deuxième extrémité (14) opposée à la première extrémité (12), laquelle est connectée à un capteur d'actionnement (13) précontraint par un ressort (13a) et réalisé séparément du sélecteur de vitesses (4, 5), un commutateur électronique (15, 15a, 15b) pouvant être actionné par celui-ci pour effectuer un changement de rapport en fonction de la position du capteur d'actionnement, laquelle peut être influencée par le mouvement de la partie d'extrémité (8).

2. Dispositif (6) selon la revendication 1,
**caractérisé en ce que**
le capteur d'actionnement (13) est disposé dans le prolongement de l'axe longitudinal (B) du goujon (11) .

3. Dispositif (6) selon la revendication 1 ou 2,
**caractérisé en ce que**
le profil de guidage (19) présente un biseau (18) le long duquel une extrémité avant rétrécie (17) du goujon (11) peut être guidée vers le bas en fonction du pivotement du sélecteur de vitesses (4, 5) .

4. Dispositif (6) selon l'une quelconque des revendications précédentes,
**caractérisé en ce**
**qu'**une extrémité avant (17) du goujon (11) présente un sélecteur rotatif (23) qui est en contact avec le profil de guidage (19) en vue de guider le mouvement.

5. Dispositif (6) selon l'une quelconque des revendications précédentes,
**caractérisé en ce que**
la partie d'extrémité (8) du sélecteur de vitesses (4, 5), le goujon (11), le profil de guidage (19), le capteur d'actionnement (13) et le commutateur (15, 15a, 15b) sont disposés dans un boîtier commun (9) .

6. Dispositif (6) selon l'une quelconque des revendications précédentes,
**caractérisé en ce que**
le capteur d'actionnement (13) présente une paroi d'appui oblique (20) sur le côté tourné vers la deuxième extrémité (14) de la partie d'extrémité (8) et en contact avec celle-ci.

7. Dispositif (6) selon la revendication 6,
**caractérisé en ce que**
l'orientation de la paroi d'appui (20) est identique à l'orientation d'un biseau (18) du profil de guidage (19) sur lequel est guidé le goujon (11).

8. Dispositif (6) selon la revendication 6 ou 7,
**caractérisé en ce que**
le mouvement du capteur d'actionnement (13) est un mouvement linéaire rectiligne, notamment seulement un mouvement linéaire dans la direction de l'axe longitudinal (B) du goujon (11) ou parallèlement à celui-ci.

9. Dispositif (6) selon l'une quelconque des revendications précédentes 1 à 5,
**caractérisé en ce que**
la position du capteur d'actionnement (13) peut être modifiée en fonction du pivotement du sélecteur de vitesses (4, 5) dans une direction perpendiculaire à l'axe longitudinal (B) du goujon (11).

10. Dispositif (6) selon la revendication 9,
**caractérisé en ce que**
le capteur d'actionnement (13) présente un étrier (22) qui repose sur un côté supérieur d'une patte (21) de la partie d'extrémité (8) du sélecteur de vitesses (4, 5) en étant retenu par un ressort qui est précontraint dans la position de base du sélecteur de vitesses (4, 5).

11. Volant de direction (1) pour un véhicule comprenant un dispositif (6) selon l'une quelconque des revendications précédentes.

12. Procédé de sélection d'un rapport d'un véhicule comprenant un sélecteur de vitesses (4, 5) qui peut pivoter autour d'un axe fixe (A) et qui provoque un changement de rapport en fonction d'un pivotement, un goujon précontraint par ressort (11) étant accouplé au sélecteur de vitesses (4, 5) et étant guidé le long d'un profil de guidage (19) en fonction d'un pivotement du sélecteur de vitesses (4, 5), et une partie d'extrémité (8) du sélecteur de vitesses (4, 5) recevant le goujon (11) présentant une première extrémité ouverte (12) hors de laquelle s'étend le goujon (11),
**caractérisé en ce que**
la partie d'extrémité (8) comprend une deuxième extrémité (14) opposée à la première extrémité (12), laquelle est connectée à un capteur d'actionnement (13) précontraint par un ressort (13a) et réalisé séparément du sélecteur de vitesses (4, 5), un commutateur électronique (15, 15a, 15b) étant actionné par celui-ci pour effectuer un changement de rapport en fonction de la position du capteur d'actionnement, laquelle peut être influencée par le mouvement de la partie d'extrémité (8).

13. Procédé selon la revendication 12,
**caractérisé en ce que**
le capteur d'actionnement (13) pour l'actionnement du commutateur (15, 15a, 15b) en fonction du pivotement du sélecteur de vitesses (4, 5) est déplacé dans la direction de l'axe longitudinal (B) du goujon (11) ou parallèlement à celui-ci vers le goujon (11) et simultanément le goujon (11) est déplacé vers le bas le long du profil de guidage (19) par le pivotement du sélecteur de vitesses (4, 5).

14. Procédé selon la revendication 12,
**caractérisé en ce que**
le capteur d'actionnement (13) pour l'actionnement du commutateur (15, 15a, 15b) en fonction du pivotement du sélecteur de vitesses (4, 5) est déplacé perpendiculairement à l'axe longitudinal (B) du goujon (11) et simultanément le goujon (11) est déplacé vers le bas le long du profil de guidage (19) par le pivotement du sélecteur de vitesses (4, 5).
